# EUROPÄISCHE PATENTSCHRIFT

(11) **EP 0 742 121 B1**
(45) Veröffentlichungstag und Bekanntmachung des Hinweises auf die Patenterteilung: **30.05.2001**
(21) Anmeldenummer: 96104102.7
(22) Anmeldetag: 15.03.1996
(51) Int. Cl.: B60R 16/02

(54) **Kabelbaum**
Wire harness
Faisceau de cables

(30) Priorität: 06.05.1995 DE 19516757
(43) Veröffentlichungstag der Anmeldung: 13.11.1996
(73) Patentinhaber: Wella Aktiengesellschaft, 64274 Darmstadt (DE)
(72) Erfinder: Mauksch, Harri, 96049 Bamberg (DE); Eckart, Hubert, 36041 Fulda (DE); Weller, Matthias, 36169 Rasdorf (DE)

(56) Entgegenhaltungen:
- WO-A-92/09089
- WO-A-93/18565
- US-A- 5 016 842
- US-A- 5 164 546
- US-A- 5 339 491

## Beschreibung

Die Erfindung betrifft einen Kabelbaum, insbesondere in Kraftfahrzeugen, nach dem Oberbegriff des Anspruchs 1, wie er aus der wo 93118565 bekannt ist.

Kraftfahrzeuge enthalten eine Vielzahl elektrischer Einzelleitungen, die in Kabelbäumen zusammengefaßt zur Versorgung und Überwachung der elektrischen Einrichtungen vorgesehen sind. Bei der Konfektionierung der Kabelbäume besteht die Forderung nach Kostenminimierung und Langlebigkeit und beim Einbau zusätzlich nach Geräuschfreiheit.

Die im Kraftfahrzeug eingebauten elektrischen Leitungen sollen also einfach und schnell zu Kabelbäumen zusammenzufassen und diese Kabelbäume kostensparend verlegbar sein, ihre Aufgabe während der gesamten Lebensdauer des Kraftfahrzeugs erfüllen, und nicht zuletzt so sicher befestigt sein, daß im Betrieb des Kraftfahrzeugs keine Geräusche durch Relativbewegungen gegenüber der Karosserie infolge betriebsbedingter Erschütterungen entstehen.

Für die Herstellung von Kabelbäumen außerhalb des Kraftfahrzeugs ist es bekannt, die Einzelleitungen auf einem Nagelbrett in die gewünschte Form und Länge zu bringen und parallel verlaufende Leitungen in Abständen mittels eines Bindfadens zu Strängen zusammenzufassen. Dieses Abbinden erfordert viel Zeit und ist daher teuer.

Es ist bereits bekannt, parallel verlaufende Einzelleitungen eines Kabelbaums mittels eines Spiralschlauchs zu umwickeln und so zusammenzufassen. Dieser Vorgang macht es jedoch erforderlich, den teilgefertigten Kabelbaum von dem Nagelbrett abzuheben, um den Spiralschlauch darunter hindurchziehen zu können. Das bekannte Verfahren birgt daher die Gefahr von Fehlern infolge von entstehender Unordnung der noch nicht zusammengefaßten Einzelleitungen und ist außerdem umständlich in der Handhabung.

Der Erfindung liegt daher die Aufgabe zugrunde, einen Kabelbaum anzugeben, der die Forderungen nach möglichst vollständiger Sicherung der elektrischen Leitungen gegen Beschädigung, Langlebigkeit und geringen Kosten erfüllt, sowie universal verwendbar ist, d. h., den unterschiedlichen Einbau- und Befestigungsbedingungen in der Karosserie genügt.

Die Lösung dieser Aufgabe erfolgt mit den im kennzeichnenden Teil des Anspruchs 1 angegebenen Maßnahmen.

Dabei ist vorteilhaft, daß ein umfassender Schutz des Kabelbaums gegen mechanische Beschädigungen gegeben ist.

Ferner ist vorteilhaft, daß auch bei verwickelten Kabelbäumen der teilkonfektionierte Teil zum Umhüllen nicht von der Unterlage abgehoben werden muß.

Eine vorteilhafte Ausgestaltung besteht darin, daß die Folienumhüllung eine Längsnaht aufweist. Dadurch läßt sich die Umhüllung leicht schließen und lassen sich abzweigende Teile des Kabelbaums aussparen.

Vorteilhafte Weiterbildungen und Ausgestaltungen der Erfindung ergeben sich aus den Unteransprüchen.

Eine Weiterbildung der Erfindung besteht in geschlossenen Folienumhüllungen aller Zweige. Dadurch ergibt sich ein lückenloser Schutz aller elektrischen Leitungen im Kabelbaum.

Eine andere Weiterbildung der Erfindung ist gekennzeichnet durch überstehende und um die Folienumhüllung umschlagbare Streifen an der Schmalseite der Folie des Abzweigs.

Hierdurch lassen sich auch die empfindlichen Knotenpunkte der Abzweige in einfacher Weise in den Schutz einbeziehen.

Gemäß einer anderen Ausgestaltung der Erfindung weist der Kabelbaum, insbesondere in Kraftfahrzeugen, eine Befestigungsvorrichtung mit einer um die zu befestigende Leitung umschlagbaren und an der Karosserie befestigbaren, flexiblen Lasche auf.

Durch die erfindungsgemäßen Maßnahmen ergibt sich der Vorteil, daß die elektrischen Leitungen sicher und dauerhaft und dabei schonend an der Kraftfahrzeugkarosserie befestigbar sind.

Ferner ist vorteilhaft, daß auch bei unterschiedlichen Einbaustellen stets die gleiche Befestigungsvorrichtung verwendbar ist.

Vorteilhafte Weiterbildungen und Ausgestaltungen der Erfindung ergeben sich aus den Unteransprüchen.

Eine Weiterbildung der Erfindung besteht darin, daß die Lasche spiegelsymmetrisch zur Umschlaglinie paarweise miteinander zusammenwirkende Druckknöpfe und Ösen aufweist. Dadurch läßt sich die Befestigungsvorrichtung ohne Verwendung von Werkzeug benutzen.

Eine andere Weiterbildung der Erfindung besteht darin, daß die Lasche spiegelsymmetrisch zur Umschlaglinie paarweise deckungsgleiche, in Kreuzschlitzen auslaufende Durchgangslöcher aufweist. Hierdurch läßt sich die Befestigungsvorrichtung in einfacher Weise auf einen aus der Karosseriewand aufragenden Stehbolzen aufstecken.

Gemäß einer anderen Weiterbildung der Erfindung ist in der Lasche zentral eine Öffnung zur Aufnahme eines tannenbaumförmigen Einsatzes vorgesehen. Dieser dient zur Festlegung der Lasche an der Karosserie, indem er zunächst durch die zentrale Öffnung und anschließend durch eine Bohrung der Karosserie gesteckt wird.

Vorteilhaft sind bei der erfindungsgemäßen Befestigungsvorrichtung wenigstens längs der Berührungslinien der zu befestigenden Leitungen mit der Lasche in Spuren angeordnete Erhebungen vorgesehen. Diese Erhebungen verbessern in einfacher Weise die Festigkeit der Klemmverbindung und sind darüber hinaus leicht, beispielsweise durch Prägen, herzustellen.

Ausführungsbeispiele der Erfindung sind in der Zeichnung dargestellt und in der nachfolgenden Beschreibung näher erläutert. Es zeigt:
- Fig. 1: schematisch in perspektivischer Darstellung ein Teilstück eines Kabelbaums nach der Erfindung,
- Fig. 2: einen Querschnitt durch den Strang des Kabelbaums nach Fig. 1 an der Schnittlinie 2-2,
- Fig. 3: die Gestaltung eines Abzweigs bei dem erfindungsgemäßen Kabelbaum,
- Fig. 4: schematisch die Befestigung des Kabelbaums in der Karosserie eines Kraftfahrzeugs,
- Fig. 5: ebenfalls schematisch ein Einzelteil für die Befestigung im Ausgangszustand,
- Fig. 6: ein Detail aus Fig. 5 und
- Fig. 7: das Einzelteil für die Befestigung in unterschiedlichen Einbauzuständen.

Gleiche Bauteile mit gleicher Funktion sind in der Zeichnung mit gleichen Bezugszeichen versehen.

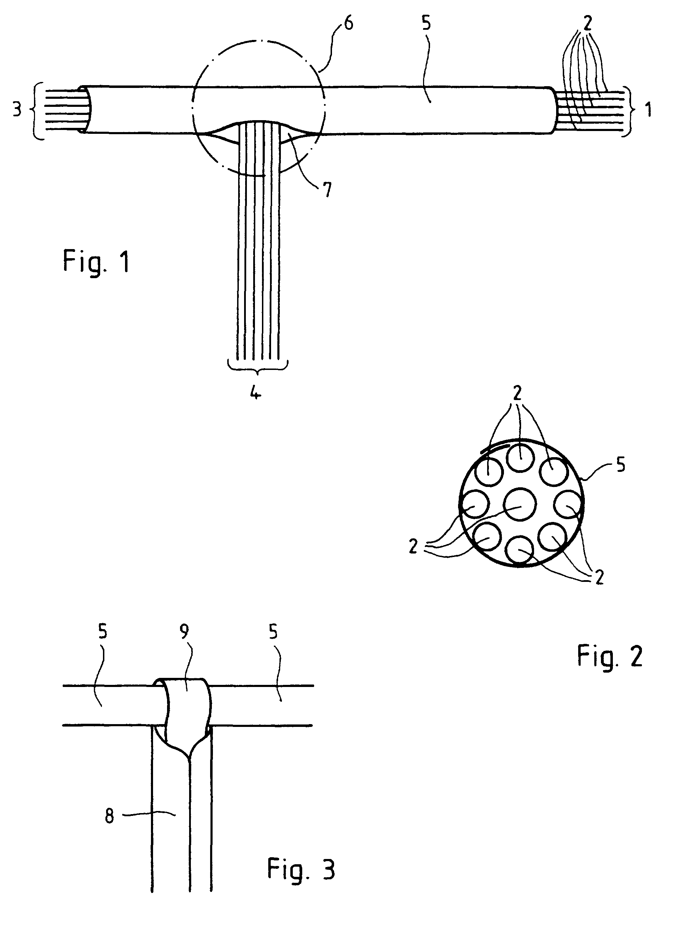

Bei einem teilkonfektionierten Kabelbaum verzweigen sich zu einem Strang 1 zusammengefaßte elektrische Leitungen 2 in einen durchlaufenden Strang 3 und einen abzweigenden Strang 4. Eine Folie 5 aus einem thermoplastischen Kunststoff, wie Polyvinylchlorid (PVC) oder Polyäthylen (PE), ist flach unter den Einzelleitungen ausgebreitet. Dabei ist die Folienbreite abhängig von der Anzahl der Einzelleitungen in dem entsprechenden Teilstück des Kabelbaums. Nach dem Stecken aller Einzelleitungen wird die Folie 5 erfaßt und überlappend zu einem geschlossenen Schlauch geformt (Fig. 2). Die Verbindung an der Stoßstelle erfolgt dann je nach Wahl des Folienwerkstoffs entweder durch Schweißen oder Kleben.

Am Knotenpunkt 6 der Abzweigung wird der Verbindungsprozeß unterbrochen. Der abzweigende Strang 4 findet in einer Tasche 7 Platz zum Austritt aus dem gebildeten Folienschlauch. Anschließend erfolgt die Umhüllung des durchlaufenden Strangs 3, wobei entsprechend der verringerten Anzahl der Einzellitzen gegenüber dem ankommenden Strang 1 die Ausgangsfolie 5 schmaler gewählt sein kann.

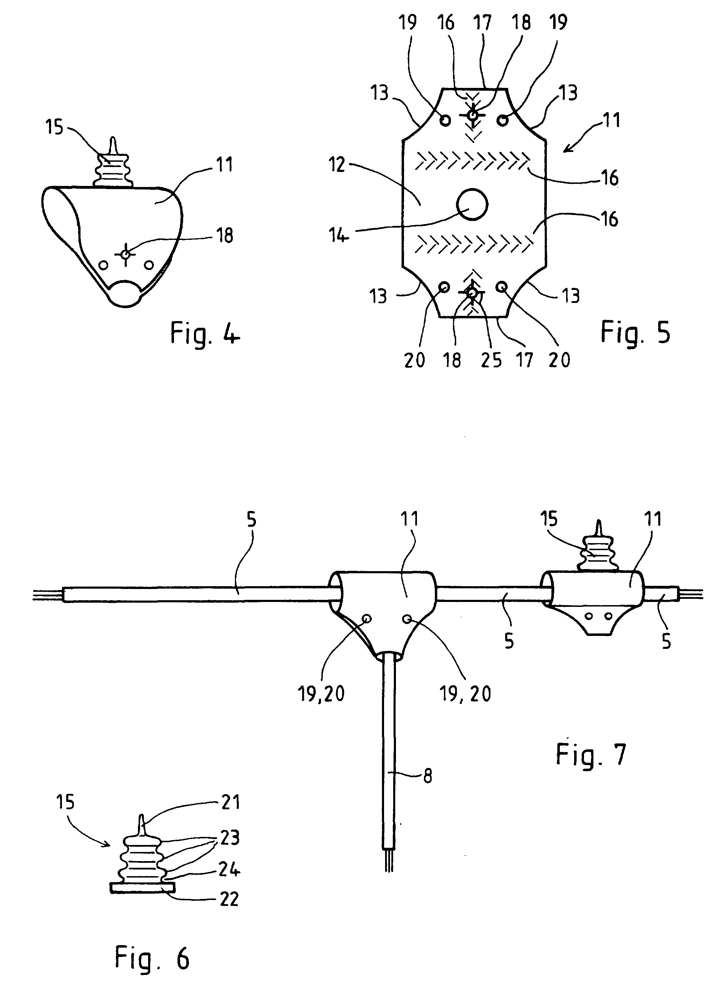

Bei größerer Längenausdehnung des abzweigenden Strangs 4 kann es erwünscht sein, auch diesen in der beschriebenen Art einzuhüllen. In diesem Fall wird auch unter den späteren Teilstrang 4 vor der Teilkonfektionierung eine entsprechend breite Folie 8 gelegt und nach dem Verarbeiten der Folie 5 die Folie 8 in gleicher Weise umgelegt und verbunden. Dabei kann es erwünscht oder notwendig sein, den Knotenpunkt 6 des Kabelbaums in die Umhüllung mit einzubeziehen (Fig. 3). Dafür ist ein Streifen 9 an der Schmalseite der Folie 8 vorgesehen, der vor dem Verbinden der Stoßstelle der Folie 8 um die Folie 5 umgeschlagen wird und nach der Fertigstellung des Kabelbaums den Knotenpunkt 6 gegen äußere Einflüsse abdeckt.

Die Befestigungsvorrichtung für einen Kabelbaum nach der Erfindung weist eine flexible Lasche 11 von annähernd quadratischer Fläche auf, die zu einer Symmetrielinie 12 spiegelsymmetrisch ist. Die Ecken 13 sind abgeschrägt, dabei hat sich eine konkave Gestaltung der Eckabschnitte im Hinblick auf die spätere Verwendung der Befestigungsvorrichtung als zweckmäßig erwiesen. In der Fläche der Lasche 11 ist eine zentrale Öffnung 14 zur Aufnahme eines tannenbaumförmigen Einsatzes 15 vorgesehen. Beidseits der Symmetrielinie 12 und in jeweils gleichem Abstand sowie rechtwinklig hierzu ist die Fläche der Lasche 11 mit Erhebungen 16, 25 in Form von zwei geradlinigen Spuren versehen. Beidseits der Symmetrielinie 12 und in strenger Symmetrie hierzu sind mittig und nahe an der Außenkante 17 deckungsgleiche Durchgangslöcher 18 in die Fläche der Lasche 11 eingearbeitet. Beidseits davon befinden sich unter Aufgabe der strengen Symmetrie auf der einen Seite der Symmetrielinie 12 Druckknöpfe 19 und auf der anderen Seite Durchgangslöcher 20 als Ösen für die Druckknöpfe 19. Die Lasche 11 ist zweckmäßigerweise aus einem dünnen Blatt eines thermoplastischen Kunststoffs durch Stanzen der Form und Prägen der Konturen 16 und Druckknöpfe 19 auf der Fläche hergestellt.

Der tannenbaumförmige Einsatz 15 (Fig. 6), zweckmäßigerweise ebenfalls aus einem thermoplastischen Kunststoff durch Spritzgießen hergestellt, weist zwischen seiner Spitze 21 und seiner Grundfläche 22 eine Reihe von umlaufenden Rippen 23 mit von der Spitze 21 zur Grundfläche 22 zunehmendem Durchmesser auf. Zwischen der letzten Rippe 23 vor der Grundfläche 22 und dieser ist eine Ringnut 24 eingearbeitet.

Zur Befestigung von elektrischen Versorgungsleitungen im Kraftfahrzeug, sei es als Einzelleitung oder als Kabelbaum, kann die Befestigungsvorrichtung entsprechend Fig. 7 in unterschiedlicher Weise Verwendung finden. In der rechten Hälfte der Fig. 7 ist die Befestigung eines durchlaufenden Kabelstrangs 21 eines Kabelbaums an der Karosserie mittels der Befestigungsvorrichtung dargestellt. Die Lasche 11 ist entlang der Symmetrielinie 12 (Fig. 5) um den Kabelstrang 21 geschlagen und mittels der Druckknöpfe 19 und der Ösen 20 zu einer den Kabelstrang 21 umfassenden Tülle geformt. Unter Verwendung der deckungsgleichen, in Kreuzschlitze auslaufenden Durchgangslöcher 18 ist die Befestigungsvorrichtung auf einen aus dem Karosserieblech aufragenden Stehbolzen aufsteckbar. Alternativ kann vor dem Formen der Lasche 11 zur Tülle auch der tannenbaumförmige Einsatz 15 in die zentrale Öffnung 14 der Lasche 11 bis zur Ringnut 24 eingesetzt und damit gesichert werden. Die nach außen aus der Tülle herausragenden umlaufenden Rippen 23 dienen dann in einer entsprechenden Bohrung des Karosserieblechs zur Festlegung der Befestigungsvorrichtung einschließlich des darin aufgenommenen Kabelstrangs 21.

Wie bereits ausgeführt, sind die elektrischen Leitungen innerhalb des Kraftfahrzeugs in Kabelsträngen verlegt, die sich im Bereich der einzelnen Verbraucher oder Lieferer elektrischer Energie verzweigen. Es ist erwünscht, daß die besonders verletzliche Abzweigstelle durch sichere Befestigung vor Bruch infolge von Vibrationen geschützt ist. In Fig. 7 verzweigt sich der Kabelstrang 5 in zwei Teilstränge 5 und 8. Die Lasche 11 der Befestigungsvorrichtung umschließt die Verzweigungsstelle derart, daß die gerade durchlaufenden Stränge 5, 5 parallel zur Umschlaglinie 12 (Fig. 5) zu liegen kommen, während der rechtwinklig abzweigende Teilstrang 8 auf beiden Seiten von den Druckknopf/Ösenpaaren 19, 20 umfaßt ist. Die Befestigung der Lasche an der Karosserie ist in diesem Anwendungsbeispiel nicht dargestellt, unterscheidet sich aber nicht von den bereits weiter oben beschriebenen Arten.

## Patentansprüche

1. Kabelbaum, insbesondere in Kraftfahrzeugen, mit einer geschlossenen, wenigstens eine Längsnaht aufweisenden Folienumhüllung (5) wenigstens längs der Mittelachse eines Strangs (1) von Einzelleitern (2), gekennzeichnet durch eine stoffschlüssige Verbindung der einander überlappenden Längskanten der Folienumhüllung (5).

2. Kabelbaum nach Anspruch 1, gekennzeichnet durch geschlossene Folienumhüllungen (5, 8) aller Zweige (1, 3, 4).

3. Kabelbaum nach Anspruch 1 oder 2, gekennzeichnet durch überstehende und um die Folienumhüllung (5) umschlagbare Streifen (9) an der Schmalseite der Folie (8) des Abzweigs (4).

4. Kabelbaum, insbesondere in Kraftfahrzeugen, nach einem oder mehreren der Ansprüche 1 bis 3, gekennzeichnet durch eine Befestigungsvorrichtung mit einer um die zu befestigende Leitung umschlagbaren und an der Karosserie befestigbaren, flexiblen Lasche (11).

5. Kabelbaum nach Anspruch 4, dadurch gekennzeichnet, daß die Lasche (11) spiegelsymmetrisch zur Umschlaglinie (12) paarweise miteinander zusammenwirkende Druckknöpfe (19) und Ösen (20) aufweist.

6. Kabelbaum nach Anspruch 4 oder 5, dadurch gekennzeichnet, daß die Lasche (11) spiegelsymmetrisch zur Umschlaglinie (12) paarweise deckungsgleiche, in Kreuzschlitzen (25) auslaufende Durchgangslöcher (18) aufweist.

7. Kabelbaum nach einem der Ansprüche 4 bis 6, dadurch gekennzeichnet, daß in der Lasche (11) zentral eine Öffnung (14) zur Aufnahme eines tannenbaumförmigen Einsatzes (15) vorgesehen ist.

8. Kabelbaum nach einem der Ansprüche 4 bis 7, dadurch gekennzeichnet, daß wenigstens längs der Berührungslinien der zu befestigenden Leitungen (5, 8) mit der Lasche (11) in Spuren angeordnete Erhebungen (16, 25) vorgesehen sind.

## Claims

1. A cable tree, in particular in motor vehicles, having - at least along the central axis of an assembly (1) of single conductors (2) - a closed sheet covering (5) which has at least one longitudinal seam, characterised by an integral connection of the overlapping longitudinal edges of the sheet covering (5).

2. A cable tree according to Claim 1, characterised by closed sheet coverings (5, 8) of all branches (1, 3, 4).

3. A cable tree according to Claim 1 or 2, characterised by projecting strips (9) at the short edge of the sheet (8) of the branch (4), these strips (9) being able to be turned down around the sheet covering (5).

4. A cable tree, in particular in motor vehicles, according to one or more of Claims 1 to 3, characterised by a fastening device with a flexible fastening component (11) which can be turned down around the line to be fastened and which can be fastened to the body.

5. A cable tree according to Claim 4, characterised in that the fastening component (11) has studs (19) and eyes (20) which are mirror-symmetrical with respect to the turndown line (12) and which co-operate in pairs.

6. A cable tree according to Claim 4 or 5, characterised in that the fastening component (11) has through holes (18) which are mirror-symmetrical with respect to the turndown line (12), are congruent in pairs and run into cross slits (25).

7. A cable tree according to any one of Claims 4 to 6, characterised in that an opening (14) to receive a fir-tree-shaped insert (15) is provided in the centre of the fastening component (11).

8. A cable tree according to any one of Claims 4 to 7, characterised in that elevations (16, 25) arranged track-wise are provided at least along the lines of contact between the lines (5, 8) to be fastened and the fastening component (11).

## Revendications

1. Faisceau de câbles, notamment dans des véhicules automobiles, comportant une gaine en feuille (5) fermée, présentant au moins une soudure longitudinale, au moins le long de l'axe médian d'un écheveau (1) de conducteurs individuels (2), caractérisé par une liaison par adhérence de matière des bords longitudinaux se recouvrant l'un l'autre de la gaine en feuille (5).

2. Faisceau de câbles selon la revendication 1, caractérisé par des gaines en feuille (5, 8) fermées autour de toutes les banches (1, 3, 4).

3. Faisceau de câbles selon la revendication 1 ou 2, caractérisé par des bandes (9) dépassantes qui peuvent être repliées sur la gaine en feuille (5), sur le petit côté de la feuille (8) de la dérivation (4).

4. Faisceau de câbles, notamment dans des véhicules automobiles, selon une ou plusieurs des revendications 1 à 3, caractérisé par un dispositif de fixation avec une éclisse (11) flexible pouvant être repliée autour de la ligne à fixer et pouvant être fixée à la carrosserie.

5. Faisceau de câbles selon la revendication 4, caractérisé en ce que l'éclisse (11) comporte des boutons-poussoirs (19) et des oeillets (12) qui coopèrent entre eux deux par deux et qui sont dans une symétrie en miroir par rapport à la ligne de pliage (12).

6. Faisceau de câbles selon la revendication 4 ou 5, caractérisé en ce que l'éclisse (11) comporte des trous de passage (18) coïncidant deux par deux, dans une symétrie en miroir par rapport à la ligne de pliage (12) et qui débouchent dans des fentes en croix (25).

7. Faisceau de câbles selon l'une des revendications 4 à 6, caractérisé en ce que dans l'éclisse (11) il est prévu au centre une ouverture (14) destinée à recevoir un insert (15) en forme de sapin.

8. Faisceau de câbles selon l'une des revendications 4 à 7, caractérisé en ce que des reliefs (16, 25) disposés dans des pistes sont prévus au moins selon des lignes de contact entre les lignes (5, 8) à fixer et l'éclisse (11).
